# EUROPEAN PATENT APPLICATION

(11) **EP 3 450 475 A1**
(43) Date of publication of application: **06.03.2019**
(21) Application number: 17789195.9
(22) Date of filing: 04.04.2017
(51) Int. Cl.: C08G 14/04, B60C 1/00, C08K 3/04, C08K 3/36, C08L 7/00, C08L 9/00, C08L 61/04

(54) **PHENOLIC RESIN TO BE BLENDED WITH RUBBER, RUBBER COMPOSITION, AND TIRE**

(30) Priority: 25.04.2016 JP 2016087015
(71) Applicant: Bridgestone Corporation, Tokyo 104-8340 (JP); Sumitomo Bakelite Co., Ltd., Shinagawa-ku Tokyo 140-0002 (JP)
(72) Inventor: MATSUO, Shigeaki, Tokyo 104-8340 (JP); SAIKI, Aya, Tokyo 104-8340 (JP); SASAHARA, Yuichi, Tokyo 104-8340 (JP); KUNIMI, Takao, Tokyo 140-0002 (JP)
(74) Representative: Lang, Johannes
(86) International application number: PCT/JP2017/014104
(87) International publication number: WO 2017/187907

(57) **Abstract**

In the phenolic resin to be blended with rubber of the present invention, when the total peak area in a chemical shift measured by ¹³C-NMR of 110 ppm or more and 160 ppm or less is taken as 100, the total peak area in 0 ppm or more and less than 60 ppm is 80 to 400 and the total peak area in 60 ppm or more and less than 110 ppm is 2 to 70.

## Description

### TECHNICAL FIELD

The present invention relates to a phenolic resin to be blended with rubber, which is obtained by polymerizing an alkylphenol and an aldehyde, a rubber composition prepared by mixing the phenolic resin, and a tire comprising the composition.

### BACKGROUND ART

Processes of producing rubber products such as a tire include the step of bonding and molding an unvulcanized rubber composition. To impart tackiness (tackiness properties) to a rubber composition, tackifier is sometimes mixed with the rubber composition. Resins are usually used as a tackifier, as they have smaller molecular weight than a rubber component, have a glass transition temperature of room temperature or more, and do not exhibit rubber elasticity.

Alkylphenol resins such as para-tertiary-butylphenol-acetylene resin and para-octyl phenol-formaldehyde resin and petroleum resins such as aromatic hydrocarbon resins, aliphatic hydrocarbon resins and alicyclic hydrocarbon resins are usually used as the above resin. Those using a biomass material have also been proposed in addition to petroleum resins (see PTL 1).

### CITATION LIST

### PATENT LITERATURE

PTL 1: JP 2012-229330 A

### SUMMARY OF INVENTION

### TECHNICAL PROBLEM

However, it was difficult even for the biomass phenolic resin exemplified in Patent Literature 1 to reduce the viscosity of unvulcanized rubber in certain conditions, and so-called tackiness properties were not satisfied.

Then, an object of the present invention is to provide a phenolic resin to be blended with rubber, which can improve the viscosity of unvulcanized rubber to a good value so that the resulting unvulcanized rubber composition has good tackiness properties.

### SOLUTION TO PROBLEM

The present inventors have found that a phenolic resin prepared by polymerizing a specific phenol and a specific aldehyde can improve the viscosity of unvulcanized rubber of an unvulcanized rubber composition to a good value and give excellent tackiness properties to the rubber composition. The present invention is as follows.
[1] A phenolic resin to be blended with rubber, wherein, when the total peak area in a chemical shift measured by ¹³C-NMR of 110 ppm or more and 160 ppm or less is taken as 100, the total peak area in 0 ppm or more and less than 60 ppm is 80 to 400 and the total peak area in 60 ppm or more and less than 110 ppm is 2 to 70.
[2] A rubber composition comprising 0.5 to 10 parts by mass of the phenolic resin to be blended with rubber (B) of [1] based on 100 parts by mass of a diene-based rubber component comprising natural rubber and polyisoprene rubber (A).
[3] A tire comprising the rubber composition of [2].

### ADVANTAGEOUS EFFECTS OF INVENTION

The present invention provides a phenolic resin to be blended, to which a hydroxyl group is added so that the resulting unvulcanized rubber composition has good tackiness properties.

### DESCRIPTION OF EMBODIMENTS

### [Phenolic resin to be blended with rubber]

The phenolic resin to be blended with rubber according to an embodiment of the present invention will be described in detail below. In the phenolic resin to be blended with rubber according to this embodiment, when the total peak area in a chemical shift measured by ¹³C-NMR of 110 ppm or more and 160 ppm or less is taken as 100, the total peak area in 0 ppm or more and less than 60 ppm is 80 to 400, and preferably 85 to 270, and the total peak area in 60 ppm or more and less than 110 ppm is 2 to 70, and preferably 5 to 30.

Peaks appearing in a chemical shift measured by ¹³C-NMR of 110 ppm or more and 160 ppm or less are attributable to aromatics, peaks appearing in 0 ppm or more and less than 60 ppm are attributable to an aliphatic alkyl, and peaks appearing in 60 ppm or more and less than 110 ppm are attributable to the hydroxyl group of saccharide adjacent to a hydroxyl group.

When the total peak area in a chemical shift measured by ¹³C-NMR of 110 ppm or more and 160 ppm or less is taken as 100 and the total peak area in 0 ppm or more and less than 60 ppm is less than 80, the problem is that the compatibility with rubber is poor and thus increasing tackiness is difficult.

Furthermore, when the total peak area in 0 ppm or more and less than 60 ppm is more than 400, the rubber and the resin are dissolved, causing the problem of difficulty in increasing tackiness.

Moreover, when the total peak area in a chemical shift measured by ¹³C-NMR of 110 ppm or more and 160 ppm or less is taken as 100 and the total peak area in 60 ppm or more and less than 110 ppm is less than 2, the interaction with the hydroxyl group is small, causing the problem of difficulty in increasing tackiness.

Furthermore, when the total peak area in 60 ppm or more and less than 110 ppm is more than 70, the problem is that the compatibility with rubber is poor and thus increasing tackiness is difficult.

The phenolic resin to be blended with rubber of this embodiment is prepared by mixing an alkylphenol and a saccharide. The phenolic resin to be blended with rubber may also be prepared by mixing an alkylphenol, a saccharide and an aldehyde.

The alkylphenol, saccharide and aldehyde used for obtaining the phenolic resin to be blended with rubber will be described below.

### (Alkylphenols)

Alkylphenols having 4 or more and 20 or less carbon atoms in an alkyl chain are preferred. Alkylphenols having an ortho-substituted alkyl chain and/or a para-substituted alkyl chain are more preferred.

Examples of phenols having an alkyl group having 4 to 20 carbon atoms include p-t-butylphenol, p-t-amylphenol, p-t-octylphenol, p-nonylphenol, p-dodecylphenol, o-t-butylphenol, o-t-amylphenol, o-t-octylphenol, o-nonylphenol and o-dodecylphenol. These may be used singly or in combinations of two or more.

Of them, phenols having an alkyl group having 4 to 12 carbon atoms are preferably used. In particular, p-t-octylphenol and o-t-octylphenol are preferably used.

In the rubber composition of this embodiment, 50% by mass or more, more preferably 70% by mass or more, and further preferably 80% by mass or more of the phenol having an alkyl group having 4 or more and 20 or less carbon atoms is preferably used based on all phenols to be used. Setting the mixing amount as described above makes good compatibility with various types of rubber and reduces the viscosity of unvulcanized rubber.

In this embodiment, other phenols such as a phenol, o-cresol and m-cresol may be mixed in addition to the phenols described above.

### (Saccharides)

The saccharide comprises at least one monosaccharide selected from the group consisting of erythrose, xylose, arabinose, glucose, mannose, galactose, erythrulose, fructose, sorbose, psicose and tagatose, or a disaccharide, a trisaccharide, a tetrasaccharide, an oligosaccharide, a polysaccharide having the monosaccharide in the structure thereof.

### (Aldehydes)

The aldehyde used in the polymerization of the phenolic resin to be blended with rubber of this embodiment is preferably an aldehyde having an alkyl group having 1 or more and 9 or less carbon atoms.

Aldehydes having an alkyl group having more than 9 carbon atoms are not preferred because they are not easily available industrially, have low reactivity and thus require more time to synthesize resin and therefore are not cost effective.

From this viewpoint, the aldehyde used in the polymerization of the phenolic resin to be blended with rubber has preferably 1 or more and 8 or less carbon atoms, and more preferably 1 or more and 4 or less carbon atoms.

Examples of aldehydes other than formaldehyde used in the polymerization of the phenolic resin of this embodiment include acetaldehyde, propionaldehyde, butyraldehyde, isobutyraldehyde, valeraldehyde, isovaleraldehyde, pivalinaldehyde, capronaldehyde, heptaldehyde, caprylaldehyde, pelargonaldehyde, glyoxal, succindialdehyde, acrolein, crotonaldehyde, propiolaldehyde and paraldehyde. These may be used singly or in combinations of two or more.

Among them, acetaldehyde, paraldehyde, propionaldehyde and butyraldehyde are most suitable. Alternatively, substances from which the above aldehyde derives or a solution of the above aldehyde may be used.

In the phenolic resin to be blended with rubber of this embodiment, 50% by mass or more, more preferably 70% by mass or more, and further preferably 80% by mass or more of an aldehyde other than formaldehyde is preferably used based on all aldehydes to be used. When fulfilling the above condition, the compatibility with various types of rubber makes good and the sufficient tackiness properties can be provided.

In the phenolic resin to be blended with rubber of this embodiment, the molar ratio of aldehyde to phenol in the reaction is preferably 0.1 to 6.0 moles, and more preferably 0.3 to 3.0 moles based on 1.0 mole of phenol. These molar ratios are preferred in consideration of the viscosity when kneading a rubber composition prepared by mixing the resulting resin.

### (Properties of phenolic resin to be blended with rubber)

The phenolic resin of this embodiment has a softening point of preferably 80 to 150°C, and more preferably 80 to 140°C in consideration of handling properties. The resin to be blended with rubber of the present invention is likely to have low softening point and thus improves workability in kneading. The softening point here is measured according to JIS-K2207-2006, the ring and ball method.

The phenolic resin of this embodiment has a weight average molecular weight of preferably 1,000 to 100,000, and more preferably 1,500 to 20,000. When the weight average molecular weight is within the above range, the workability in kneading with a rubber component improves. The weight average molecular weight in this case is measured by gel permeation chromatography (GPC) in terms of polystyrene.

### [Rubber composition]

Hereinafter the rubber composition of an embodiment of the present invention will be described in detail.

The rubber composition of this embodiment comprises 0.5 to 10 parts by mass of the phenolic resin to be blended with rubber described above based on 100 parts by mass of a diene-based rubber component comprising natural rubber and polyisoprene rubber.

In the rubber composition of the present invention, the mixing amount of the phenolic resin to be blended with rubber is preferably 1 part by mass or more and 10 parts by mass or less, and more preferably 2 parts by mass or more and 7 parts by mass or less based on 100 parts by mass of the rubber component.

When the mixing amount of the phenolic resin to be blended with rubber is less than 0.5 parts by mass, sufficient tackiness properties cannot be expressed. When the mixing amount of the phenolic resin to be blended with rubber is more than 10 parts by mass, other physical properties are adversely affected, and thus the amount is not preferable.

This may be because the phenolic resin to be blended with rubber prepared by polymerizing phenol having an alkyl group having 4 or more and 20 or less carbon atoms, aldehyde having 1 or more and 9 or less carbon atoms and saccharide provides a hydrogen bonding effect of hydroxyl groups. This seems to consequently enhance tackiness properties.

Each component will be described in detail below.

### <Rubber component>

The rubber component contained in the rubber composition of this embodiment includes 30% by mass or more of natural rubber based on the total mass of the rubber component. When a ratio of natural rubber is less than 30% by mass based on the total mass of the rubber component, tackiness properties become worse.

For the rubber component, synthetic rubber may be used as long as the rubber component contains natural rubber in the above ratio. Examples of synthetic rubber to be used include diene-based rubber such as cis-1,4-polyisoprene rubber, styrene-butadiene rubber, low cis-1,4-polybutadiene rubber, high cis-1,4-polybutadiene rubber, ethylenepropylene-diene rubber, chloroprene rubber, halogenated butyl rubber, acrylonitrile-butadiene rubber and acrylonitrile-styrene-butadiene rubber. These may be used in combination.

### <Phenolic resin>

The phenolic resin to be blended with rubber described above is used for the rubber composition of this embodiment.

### <Other components>

The rubber composition of this embodiment may contain other components if necessary. A suitable amount of compounding ingredients usually used in the rubber industry, for example, a filler, a softening agent, a coupling agent, a vulcanizing agent, a vulcanization accelerator, a vulcanization auxiliary, an antioxidant, antiozonant and antiaging agent may be mixed.

### (Filler)

It is preferable to mix a filler in the rubber composition of this embodiment from the viewpoint of enhancing reinforcing performance after vulcanization. The filler is preferably at least one selected from carbon black and an inorganic filler. In this embodiment, carbon black is not contained in the inorganic fillers.

When silica is used as an inorganic filler in the rubber composition of this embodiment, the total amount of carbon black and fillers including silica to be mixed is preferably 30 parts by mass or more and 100 parts by mass or less, and more preferably 30 parts by mass or more and 60 parts by mass or less based on 100 parts by mass of the rubber component. The total amount is further preferably 30 parts by mass or more and 55 parts by mass or less. When the total amount of carbon black and inorganic fillers is 30 parts by mass or more, it is favorable from the viewpoint of improving wet-heat adhesiveness. When the total amount is 60 parts by mass or less, it is favorable from the viewpoint of improving low-heat-generation property.

### (Carbon black)

The higher the ratio of carbon black to the fillers is, the higher the effect of decreasing electric resistance and preventing static charge can be obtained. Furthermore, the viscosity increase of the rubber composition in an unvulcanized state can be reduced and the dispersion effect by kneading could be high.

Accordingly, the proportion of carbon black in the filler is preferably 60% by mass or more, and more preferably 100% by mass.

Preferred examples of carbon black to be used include carbon black of the grades SAF, ISAF, IISAF, N339, HAF, FEF, GPF and SRF, with high, medium or low structure, and especially preferred examples among these include carbon black of the grades SAF, ISAF, IISAF, N339, HAF and FEF.

More preferred examples include carbon black of the grades FEF, GPF and SRF, and particularly preferred examples include carbon black of the grades SAF, ISAF, IISAF, N339 and HAF.

The nitrogen adsorption specific surface area (N₂SA, as measured according to JIS K 6217-2:2001) of the carbon black is preferably 30 m²/g or more and 250 m²/g or less. One alone of the above-mentioned carbon blacks may be used singly, or two or more of them may be used as combined.

The above carbon black has an average primary particle size of preferably 20 to 60 nm, and more preferably 28 to 55 nm.

### (Inorganic Filler)

An inorganic filler may be mixed, as needed, in the rubber composition of this embodiment. The inorganic filler used in this embodiment includes silica and at least one selected from inorganic compounds represented by the following general formula (I).

dM¹·xSiO_{y}·zH₂O (I)

wherein, in the general formula (I), M¹ is at least one selected from a metal selected from aluminum, magnesium, titanium, calcium and zirconium, and oxides or hydroxides of those metals, their hydrates and carbonates of the metals; d, x, y and z each indicate an integer of 1 to 5, an integer of 0 to 10, an integer of 2 to 5, and an integer of 0 to 10, respectively.

In the general formula (I), when x and z are both 0, the inorganic compound is at least one metal selected from aluminum, magnesium, titanium, calcium and zirconium, or a metal oxide or a metal hydroxide thereof.

In the case where silica is used as the inorganic filler, the BET specific surface area of the silica (as measured according to ISO5794/1) is preferably 40 m²/g or more and 350 m²/g or less. Silica whose BET specific surface area falls within the above range has an advantage that it can realize both rubber reinforcing performance and dispersibility in a rubber component. From this viewpoint, silica whose BET specific surface area falls within a range of 80 m²/g or more and 350 m²/g or less is more preferred, and silica whose BET specific surface area falls within a range of 120 m²/g or more and 350 m²/g or less is especially preferred.

A commercial product can be used as silica, and above all, use of wet-process silica, dry-process silica or colloidal silica is preferred, and use of wet-process silica is especially preferred.

As silica of those types, commercial products of "Ultrasil (registered trademark) VN3" manufactured by Degussa (BET specific surface area = 175 m²/g), etc., as well as "Ultrasil (registered trademark) 360", "Ultrasil (registered trademark) 7000", and "Zeosil (registered trademark) 115GR", "Zeosil (registered trademark) 1115MP", "Zeosil (registered trademark) 1205MP" and "Zeosil (registered trademark) Z85MP" manufactured by Rhodia Japan, "Nipsil (registered trademark) AQ" manufactured by Tosoh Silica Corporation and others are preferably used.

In the case where an inorganic compound represented by the general formula (I) is mixed as the inorganic filler, alumina (Al₂O₃) such as γ-alumina and α-alumina; alumina hydrate (Al₂O₃·H₂O) such as boemite and diaspora; aluminum hydroxide (Al(OH)₃) such as gibbsite and bayerite; aluminum carbonate (Al₂(CO₃)₃); magnesium hydroxide (Mg(OH)₂); magnesium oxide (MgO); magnesium carbonate (MgCO₃); talc (3MgO·4SiO₂·H₂O); attapulgite (5MgO·8SiO₂·9H₂O); titanium white (TiO₂); titanium black (TiO₂ₙ₋₁); calcium oxide (CaO); calcium hydroxide (Ca(OH)₂); aluminum magnesium oxide (MgO·Al₂O₃); clay (Al₂O₃·2SiO₂); kaolin (Al₂O₃·2SiO₂·2H₂O); pyrophyllite (Al₂O₃-·4SiO₂·H₂O); bentonite (Al₂O₃·4SiO₂·2H₂O); aluminum silicate (such as Al₂SiO₅ and Al₄·3SiO₄·5H₂O), magnesium silicate (such as Mg₂SiO₄ and MgSiO₃); calcium silicate (such as Ca₂SiO₄); aluminum calcium silicate (such as Al₂O₃·CaO·2SiO₂); magnesium calcium silicate (CaMgSiO₄); calcium carbonate (CaCO₃); zirconium oxide (ZrO₂); zirconium hydroxide (ZrO(OH)₂·nH₂O); zirconium carbonate (Zr(CO₃)₂); crystalline aluminosilicate salts and the like containing hydrogen, an alkali metal or an alkaline earth metal, which compensates the charge, such as various kinds of zeolite can be used. Furthermore, it is preferable that M¹ in the general formula (I) is at least one selected from metallic aluminum, an oxide or a hydroxide of aluminum, hydrates thereof, and aluminum carbonate.

As the aluminum hydroxide that can be mixed in the rubber composition of this embodiment, aluminum hydroxide whose nitrogen adsorption specific surface area is 5 m²/g or more and 250 m²/g or less and whose DBP oil absorption amount is 50 ml/100 g or more and 100 ml/100 g or less is preferred.

One alone or two or more of these inorganic compounds represented by the general formula (I) may be used either singly or as combined.

As the inorganic filler in this embodiment, silica alone may be used, or silica and one or more inorganic compounds represented by the general formula (I) may be used as combined.

### (Silane Coupling Agent)

A silane coupling agent may be further mixed in the rubber composition for tires of this embodiment where an inorganic filler including silica is mixed therein, for the purpose of further improving reinforcing performance and fuel consumption reduction with the rubber composition for tires.

Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzoyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, 3-ocatanoylthiopropyltriethoxysilane, etc. Among these, bis(3-triethoxysilylpropyl) polysulfide, 3-octanoylthiopropyltriethoxysilane and 3-trimethoxysilylpropylbenzothiazyl tetrasulfide are preferred from the viewpoint of the reinforcing performance improving effect, etc.

One alone or two or more kinds of these silane coupling agents may be used either singly or as combined.

From the viewpoint of the effect as the coupling agent and for preventing gelation, a preferred compounding amount of the silane coupling agent is preferably, as a ratio by mass (silane coupling agent/silica), (1/100) to (20/100). When the ratio is (1/100) or more, the effect of improving low-heat-generation property of the rubber composition for tires can be more favorably exhibited, and when (20/100) or less, the cost of the rubber composition can be reduced to improve the economic potential thereof. Further, the ratio by mass is more preferably (3/100) to (20/100), and the ratio by mass is especially preferably (4/100) to (10/100).

### (Vulcanizing Agent)

The vulcanizing agent that can be mixed in the rubber composition of this embodiment includes sulfur, etc. The sulfur component includes powdery sulfur, precipitated sulfur, colloidal sulfur, insoluble sulfur, highly-dispersible sulfur, etc., and powdery sulfur is preferred.

The amount of the vulcanizing agent to be used is preferably 0.1 parts by mass or more and 10 parts by mass or less as the sulfur content based on 100 parts by mass of the rubber component, more preferably 1.0 part by mass or more and 5.0 parts by mass or less based on 100 parts by mass of the rubber component. When the amount is less than 0.1 parts by mass, the breaking strength, the abrasion resistance and the fuel efficiency of the vulcanized rubber may worsen, but when more than 10 parts by mass, the rubber elasticity may be thereby lost.

### (Vulcanization Accelerator)

The vulcanization accelerator that can be mixed in the rubber composition of this embodiment includes thiazole-type vulcanization accelerators, sulfenamide-type vulcanization accelerators and guanidine-type vulcanization accelerators, etc., described in pages 412 to 413 of Handbook of Rubber Industry <4th Ed.> (January 20, 1994, issued by Society of Rubber Industry, Japan). Among these, for example, there are mentioned N-cyclohexyl-2-benzothiazolyl sulfenamide (CBS), N-tert-butyl-2-benzothiazolyl sulfenamide (BBS), N,N-dicyclohexyl-2-benzothiazolyl sulfenamide (DCBS), 2-mercaptobenzothiazole (MBT) and dibenzothiazyl disulfide (MBTS), diphenylguanidine (DPG).

Above all, N-cyclohexyl-2-benzothiazolyl sulfenamide (CBS), N-tert-butyl-2-benzothiazolyl sulfenamide (BBS), N,N-dicyclohexyl-2-benzothiazolyl sulfenamide (DCBS), or combined use of dibenzothiazyl disulfide (MBTS) and diphenylguanidine (DPG) is preferred.

The amount of the vulcanization accelerator to be used is not specifically limited but preferably falls within a range of 0.5 parts by mass or more and 3 parts by mass or less based on 100 parts by mass of the rubber component. Above all, a range of 0.5 parts by mass or more and 1.5 parts by mass or less based on 100 parts by mass of the rubber component is especially preferred.

### (Vulcanization Retardant)

Examples of the vulcanization retardant that can be mixed in the rubber composition of this embodiment include phthalic anhydride, benzoic acid, salicylic acid, N-nitrosodiphenylamine, N-(cyclohexylthio)-phthalimide (CTP), sulfonamide derivatives, diphenylurea, bis(tridecyl)pentaerythritol diphosphite, etc., and N-(cyclohexylthio)-phthalimide (CTP) is preferably used.

### (Softening agent)

The softening agent is not particularly limited and may be selected and used from those conventionally used as a softening agent for rubber. Softening agents include mineral oil types, vegetable oil types and synthetic oil types. Examples of mineral oil types include naphthenic processing oil and paraffinic processing oil. Examples of vegetable oil types include castor oil, cottonseed oil, linseed oil, rape seed oil, soybean oil, palm oil, coconut oil, peanut oil, Japan wax, pine oil and olive oil.

### (Antiaging Agent)

The antiaging agent that can be mixed in the rubber composition of this embodiment includes those described in pages 436 to 443 of "Handbook of Rubber Industry <4th Ed.>" edited by Society of Rubber Industry, Japan. Among them, examples include, for example, TMDQ (polymerized 2,2,4-trimethyl-1,2-dihydroquinoline) ("RD" (tradename) manufactured by Kawaguchi Chemical Industry Co., Ltd.), "NOCRAC 224" (tradename) manufactured by Ouchi Shinko Chemical Industrial Co., Ltd.), N-isopropyl-N'-phenyl-p-phenylenediamine, [N-(1,3-dimethylbutyl)-N'-phenyl-p-phenylenediamine], 6-ethoxy-2,2,4-trimethyl-1,2-dihydroquinoline and a high-temperature condensate of diphenylamine and acetone, and the like.

The amount of the antiaging agent to be used is preferably 0.1 parts by mass or more and 5.0 parts by mass or less based on 100 parts by mass of the rubber component, more preferably 0.3 parts by mass or more and 3.0 parts by mass or less based on 100 parts by mass of the rubber component.

### (Organic Acid)

The organic acid that can be mixed in the rubber composition of this embodiment includes saturated fatty acids and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, nervonic acid, etc., as well as resin acids such as rosin acid, modified rosin acid, etc.

In the production method for the rubber composition of this embodiment, it is preferable that stearic acid accounts for 50 mol% or more of the organic acid among the above-mentioned organic acids, since the organic acid must sufficiently exhibit the function as a vulcanization acceleration aid. Less than 50 mol% in the organic acid may be a rosin acid (including a modified rosin acid) and/or a fatty acid other than stearic acid that may be contained in the case of producing a styrene-butadiene copolymer through emulsion polymerization.

### [Method of producing phenolic resin to be blended with rubber]

The method of producing a phenolic resin of this embodiment, which is prepared by polymerization of alkylphenol and saccharide, and in some cases, aldehyde, will be described.

For the ratio of the amount to be used (in mass) of the phenol to the saccharide described above in the phenolic resin, the ratio of the phenol component is preferably 1 to 50 times, and more preferably 2 to 20 times when saccharide is taken as 1. When the ratio of the phenol component to saccharide is 1 time or more, the reaction rate and the yield can be increased, and the molecular weight can also be increased. When the ratio of the phenol component to saccharide is 50 times or less, a biomass phenolic resin can be obtained economically.

An acid catalyst usually used for the production of conventional novolak-type phenolic resins may be used. Examples thereof include inorganic acid (such as hydrochloric acid, sulfuric acid, nitric acid, phosphoric acid, phosphorus acid, inorganic phosphonic acid), organic acids (such as carboxylic acids including formic acid, oxalic acid and acetic acid, sulfonic acids such as sulfonic acid, phenolsulfonic acid, toluenesulfonic acid and naphthalenesulfonic acid, alkyl sulfuric acid such as dimethyl sulfuric acid and diethyl sulfuric acid, phosphates and organic phosphonic acids).

The amount to be used of the acid catalyst is preferably 0.1 to 50% by mass, more preferably 0.2 to 10% by mass based on the total (100% by mass) of the phenol component and saccharide. When the amount is 0.1% by mass or more, the reaction proceeds well. When the amount is 50% by mass or less, acid decomposition and gelation of the reaction product can be prevented.

The reaction temperature at which the phenol component and saccharide are reacted is preferably 20 to 200°C, and more preferably 80 to 160°C. When the reaction temperature is 20°C or more, the reaction proceeds sufficiently. When the reaction temperature is 200°C or less, decomposition of the reaction product can be prevented.

The reaction time, which varies depending on the reaction temperature, is preferably 0.5 to 20 hours, and more preferably 1 to 5 hours. When the reaction time is 0.5 hour or more, a novolak type biomass phenolic resin can be obtained at high yield. When the reaction time is 20 hours or less, productivity is high.

In the method of producing a phenolic resin of this embodiment, the content of unreacted alkylphenol is not particularly limited, and is preferably 5% by mass or less, and more preferably 3% by mass or less. In the present invention, the content of unreacted alkylphenol is determined by gas chromatography based on an internal standard method according to JIS K 0114, using 2,5-xylenol as internal standard.

### [Method of producing rubber composition]

The rubber composition of this embodiment may be obtained by kneading the above components and various additional components as needed using a kneading machine, for example, an open kneader such as a roll or a closed kneader such as a Banbury mixer.

The rubber composition of this embodiment is subjected to mold processing and then may be applied to various rubber products as a rubber member. For example, the rubber composition of the present invention may be suitably used for a tire, more specifically for tread, sidewall, bead, carcass and belt, and the like, of a tire. The rubber composition of the present invention may also be used for various industrial rubber products such as vibration proof rubber, belt, electric parts, wire coating, packings, sealing gaskets, waterproof sheet and hose, and the like, and daily use rubber products.

Furthermore, due to the low viscosity of unvulcanized rubber, the rubber composition of this embodiment may be used as an adhesive.

### EXAMPLES

Hereinafter the present invention will be described in detail by means of Examples. The present invention is not limited to Examples. In the following Examples, "part(s)" and "%" are based on mass unless otherwise specified. The compounding of Table 1 is in part(s) by mass.

### (Preparation Example 1)

A reactor equipped with a stirrer, a reflux condenser and a thermometer was charged with 1,000 parts of p-t-octylphenol, 315 parts of 37% formaldehyde, 111 parts of glucose and 10 parts of p-toluenesulfonic acid. The mixture was reacted for 1 hour under reflux conditions. Then the mixture was reacted for 3 hours at 150°C while removing water by distillation. Water and unreacted monomers were removed by distillation under reduced pressure until the amount of water and the amount of free monomers reached a pre-determined amount, and the resultant was taken out of the reactor to give Phenolic resin A.

### (Preparation Example 2)

The reaction was carried out in the same manner as in Preparation Example 1 except for using 111 parts of sucrose instead of glucose to give Phenolic resin B.

### (Preparation Example 3)

The reaction was carried out in the same manner as in Preparation Example 1 except for using 111 parts of fructose instead of glucose to give Phenolic resin C.

### (Preparation Example 4)

The reaction was carried out in the same manner as in Preparation Example 1 except for using 53 parts of sucrose instead of glucose to give Phenolic resin D.

### (Preparation Example 5)

The reaction was carried out in the same manner as in Preparation Example 1 except for using 250 parts of glucose to give Phenolic resin E.

### (Preparation Example 6)

A reactor equipped with a stirrer, a reflux condenser and a thermometer was charged with 1,000 parts of p-t-octylphenol, 111 parts of fructose, 620 parts of n-octylaldehyde and 10 parts of p-toluenesulfonic acid. The mixture was reacted for 12 hours under reflux conditions. Water and unreacted monomers were removed by distillation under reduced pressure until the amount of water and the amount of free monomers reached a pre-determined amount, and the resultant was taken out of the reactor to give Phenolic resin F.

### (Preparation Example 7)

The reaction was carried out in the same manner as in Preparation Example 1 except for using 1,000 parts of p-t-butylphenol instead of p-t-octylphenol to give Phenolic resin G.

Durez #19900 (p-t-octylphenol-formaldehyde resin) manufactured by N.V. Sumitomo Bakelite Europe was used as Phenolic resin H.

Durez #32333 (p-t-butylphenol-formaldehyde resin) manufactured by N.V. Sumitomo Bakelite Europe was used as Phenolic resin I.

### (Comparative Preparation Example 1)

A reactor equipped with a stirrer, a reflux condenser and a thermometer was charged with 1,000 parts of p-t-butylcatechol, 390 parts of 37% formaldehyde and 10 parts of oxalic acid. The mixture was reacted for 3 hours under reflux conditions. Water and unreacted monomers were removed by distillation under reduced pressure until the amount of water and the amount of free monomers reached a pre-determined amount, and the resultant was taken out of the reactor to give Phenolic resin J.

### (Comparative Preparation Example 2)

The reaction was carried out in the same manner as in Preparation Example 1 except for using 10 parts of sucrose instead of glucose to give Phenolic resin K.

### (Comparative Preparation Example 3)

The reaction was carried out in the same manner as in Preparation Example 1 except for using 1,000 parts of sucrose instead of glucose to give Phenolic resin L.

### <Examples 1 to 9 and Comparative Examples 1 to 8>

Compounding components except for vulcanization accelerator were put in a 1.7 L Banbury mixer made by Kobe Steel, Ltd. at a filling rate of 58% according to the compounding prescription shown in Table 1. The mixture was kneaded at 80 rpm for 3 minutes until the temperature reached 160°C. Subsequently, the vulcanization accelerator was added to the resulting kneaded product in the mixing amount shown in Table 1, and then the mixture was kneaded at 80°C for 5 minutes using an open roll to give an unvulcanized rubber composition with the compounding of Examples and Comparative Examples. The unvulcanized rubber was evaluated by the following method of evaluation.

The sample unvulcanized rubber composition was vulcanized to prepare a cross-linked rubber composition, and the vulcanized rubber was evaluated for tan δ as described below.

In Comparative Examples 6 to 8, no phenolic resin was added but glucose was added in the same amount as that contained in Phenolic resin A for comparison.

### [Method for evaluation of rubber composition]

### (a) Viscosity of unvulcanized rubber

The dynamic storage elastic (shear) modulus G' was measured by using a rheometer for unvulcanized materials, "RPA2000 (made by ALPHA TECHNOLOGIES)" under the conditions of a temperature of 130°C, a strain (twisting angle) of 1° and a frequency of 100 cpm. The higher the value is, the higher the viscosity of unvulcanized rubber and the better are.

### (b) Tackiness properties of unvulcanized rubber

The adhesiveness in the unvulcanized state was measured and evaluated using a pickup type tack meter (product name: PICMA Tack Tester made by Toyo Seiki Seisaku-sho, Ltd.) at room temperature. The higher the value is, the higher the tackiness of unvulcanized rubber and the better are.

### (c) Tan δ of vulcanized rubber

Tan δ was measured using a spectrometer (made by Ueshima Seisakusho Co., Ltd.) at a frequency of 52 Hz, an initial strain of 10%, a temperature of measurement of 60°C and a dynamic strain of 1%. The results are expressed as an index with the tan δ of Comparative Example 5 being 100 by the following equation. The smaller the index value is, the smaller the heat generation and the hystericis loss are.

### (d) For peak area in chemical shift measured by ¹³C-NMR

Peak areas were calculated based on the integrated value of peaks in a ¹³C-NMR spectrum. JNM-ECA400 superconducting FT-NMR spectrometer made by JEOL Ltd. was used as an NMR spectrometer. The analyzed nucleus was ¹³C, the temperature of measurement was 25°C, the solvent for measurement was deuterated acetone, the cumulative number for ¹³C was 20,000 times, and the repeated standby time for ¹³C was 10 seconds. The peak derived from the solvent for measurement was used as the reference peak. ¹³C was set at 29.8 ppm as internal standard.

### (e) Method of measuring content of saccharide

The content of hydroxyl groups in the phenolic resin was determined by Nuclear Magnetic Resonance (NMR). For the condition of NMR, the content of hydroxyl groups derived from saccharide was determined from a ¹H-NMR spectrum of a sample obtained by acetylation of the phenolic resin with acetic anhydride, by using a calibration curve of hydroxyl groups derived from saccharide which had been previously prepared. "JNM-AL300" made by JEOL Ltd. was used as the measurement apparatus (frequency 300 MHz).

**Table 1**

| | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Content of saccharide (%) | 10 | 10 | 10 | 5 | 20 | 10 | 10 | 10 | 10 | 10 | 1 | 50 | 10 |

| Chemical shift measured by ¹³C-NMR | | | | | | | | | | | | | |
|---|---|---|---|---|---|---|---|---|---|---|---|---|---|
| 0-60ppm | 152 | 152 | 152 | 151 | 155 | 270 | 85 | 150 | 83 | 83 | 150 | 172 | 152 |
| 60-110ppm | 12 | 12 | 12 | 6 | 28 | 18 | 9 | 0 | 0 | 0 | 1 | 110 | 12 |

| Compounding | | | | | | | | | | | | | |
|---|---|---|---|---|---|---|---|---|---|---|---|---|---|
| Natural rubber | 100 | 100 | 100 | 100 | 100 | 100 | 100 | 100 | 100 | 100 | 100 | 100 | 100 |
| BR*¹ | | | | | | | | | | | | | |
| SBR*² | | | | | | | | | | | | | |
| Phenolic resin A | 2 | | | | | | | | | | | | |
| Phenolic resin B | | 2 | | | | | | | | | | | |
| Phenolic resin C | | | 2 | | | | | | | | | | |
| Phenolic resin D | | | | 2 | | | | | | | | | |
| Phenolic resin E | | | | | 2 | | | | | | | | |
| Phenolic resin F | | | | | | 2 | | | | | | | |
| Phenolic resin G | | | | | | | 2 | | | | | | |
| Phenolic resin H | | | | | | | | 2 | | | | | |
| Phenolic resin I | | | | | | | | | 2 | | | | |
| Phenolic resin J | | | | | | | | | | 2 | | | |
| Phenolic resin K | | | | | | | | | | | 2 | | |
| Phenolic resin L | | | | | | | | | | | | 2 | |
| Carbon black*³ | 50 | 50 | 50 | 50 | 50 | 50 | 50 | 50 | 50 | 50 | 50 | 50 | 50 |
| Silica*⁴ | | | | | | | | | | | | | |
| Silane coupling agent*⁵ | | | | | | | | | | | | | |
| Stearic acid | 2 | 2 | 2 | 2 | 2 | 2 | 2 | 2 | 2 | 2 | 2 | 2 | 2 |
| Zinc oxide | 3 | 3 | 3 | 3 | 3 | 3 | 3 | 3 | 3 | 3 | 3 | 3 | 3 |
| Oil*⁶ | 2 | 2 | 2 | 2 | 2 | 2 | 2 | 2 | 2 | 2 | 2 | 2 | 2 |
| Antiaging agent*⁷ | 3 | 3 | 3 | 3 | 3 | 3 | 3 | 3 | 3 | 3 | 3 | 3 | 3 |
| Vulcanization accelerator MBTS*⁸ | 0.2 | 0.2 | 0.2 | 0.2 | 0.2 | 0.2 | 0.2 | 0.2 | 0.2 | 0.2 | 0.2 | 0.2 | 0.2 |
| Vulcanization accelerator TBBS*⁹ | 0.6 | 0.6 | 0.6 | 0.6 | 0.6 | 0.6 | 0.6 | 0.6 | 0.6 | 0.6 | 0.6 | 0.6 | 0.6 |
| Viscosity of unvulcanized rubber | 99 | 99 | 99 | 98 | 100 | 100 | 100 | 100 | 100 | 100 | 100 | 100 | 100 |
| Tackiness of unvulcanized rubber | 173 | 171 | 170 | 167 | 175 | 170 | 165 | 152 | 150 | 154 | 150 | 155 | 100 |
| tanδ of vulcanized rubber | 107 | 106 | 106 | 106 | 108 | 105 | 105 | 110 | 110 | 110 | 110 | 100 | 100 |

**Table 2**

| | Example 8 | Comparative Example 7 |
|---|---|---|
| Content of saccharide (%) | 10 | 10 |

| Chemical shift measured by ¹³C-NMR | | |
|---|---|---|
| 0-60ppm | 152 | 152 |
| 60-110ppm | 12 | 12 |

| Compounding | | |
|---|---|---|
| Natural rubber | 80 | 80 |
| BR*¹ | 20 | 20 |
| SBR*² | | |
| Phenolic resin A | 2 | |
| Phenolic resin B | | |
| Phenolic resin C | | |
| Phenolic resin D | | |
| Phenolic resin E | | |
| Phenolic resin F | | |
| Phenolic resin G | | |
| Phenolic resin H | | |
| Phenolic resin I | | |
| Phenolic resin J | | |
| Phenolic resin K | | |
| Phenolic resin L | | |
| Carbon black*³ | 40 | 40 |
| Silica*⁴ | 10 | 10 |
| Silane coupling agent*⁵ | 1 | 1 |
| Stearic acid | 2 | 2 |
| Zinc oxide | 3 | 3 |
| Oil*⁶ | 2 | 2 |
| Antiaging agent*⁷ | 3 | 3 |
| Vulcanization accelerator MBTS*⁸ | 0.2 | 0.2 |
| Vulcanization accelerator TBBS*⁹ | 0.6 | 0.6 |
| Viscosity of unvulcanized rubber | 100 | 100 |
| Tackiness of unvulcanized rubber | 173 | 100 |
| tanδ of vulcanized rubber | 106 | 100 |

**Table 3**

| | Example 9 | Comparative Example 8 |
|---|---|---|
| Content of saccharide (%) | 10 | 10 |

| Chemical shift measured by ¹³C-NMR | | |
|---|---|---|
| 0-60ppm | 152 | 152 |
| 60-110ppm | 12 | 12 |

| Compounding | | |
|---|---|---|
| Natural rubber | 80 | 80 |
| BR*¹ | | |
| SBR*² | 20 | 20 |
| Phenolic resin A | 2 | |
| Phenolic resin B | | |
| Phenolic resin C | | |
| Phenolic resin D | | |
| Phenolic resin E | | |
| Phenolic resin F | | |
| Phenolic resin G | | |
| Phenolic resin H | | |
| Phenolic resin I | | |
| Phenolic resin J | | |
| Phenolic resin K | | |
| Phenolic resin L | | |
| Carbon black*³ | 40 | 40 |
| Silica*⁴ | 10 | 10 |
| Silane coupling agent*⁵ | 1 | 1 |
| Stearic acid | 2 | 2 |
| Zinc oxide | 3 | 3 |
| Oil*⁶ | 2 | 2 |
| Antiaging agent*⁷ | 3 | 3 |
| Vulcanization accelerator MBTS*⁸ | 0.2 | 0.2 |
| Vulcanization accelerator TBBS*⁹ | 0.6 | 0.6 |
| Viscosity of unvulcanized rubber | 100 | 100 |
| Tackiness of unvulcanized rubber | 173 | 100 |
| tanδ of vulcanized rubber | 106 | 100 |

| | | |
|---|---|---|
| [Note] Notes in Tables 1-3 are as follows. *1: Polybutadiene rubber, tradename "JSR BR01" manufactured by JSR Corporation *2: Solution-polymerized styrene-butadiene copolymer rubber, trade name "Tufdene 2000" manufactured by Asahi Kasei Corp. *3: Trade name "# 80" (average primary particle size: 20 nm) manufactured by Asahi Carbon Co., Ltd. *4: Trade name "Nipsil AQ" (BET surface area 205 m²/g) manufactured by Tosoh Silica Corporation *5: Bis(3-triethoxysilylpropyl)disulfide (average sulfur chain length: 2.35), silane coupling agent, trade name "Si 75" (trademark) manufactured by Evonik Industries *6: Processing oil, trade name "A/O MIX" manufactured by Sankyo Yuka Kogyo K.K. *7: N-(1,3-dimethylbutyl)-N'-phenyl-p-phenylenediamine, trade name "NOCRAC 6C" manufactured by Ouchi Shinko Chemical Industrial Co., Ltd. *8: Vulcanization accelerator MBTS: di-2-benzothiazolyl disulfide, trade name "Sanceler DM" manufactured by Sanshin Chemical Industry Co., Ltd *9: Vulcanization accelerator TBBS: N-tert-butyl-2-benzothiazolylsulfenamide, trade name "Sanceler NS" manufactured by Sanshin Chemical Industry Co., Ltd | | |

### [Results of evaluation]

In Examples, a comparison between Examples 1 to 9 and Comparative Examples 1 to 8 shows that the phenolic resin of the present invention provides excellent tackiness without a substantial change in the viscosity of unvulcanized rubber and the tanδ of vulcanized rubber.

## Claims

1. A phenolic resin to be blended with rubber, wherein,
when the total peak area in a chemical shift measured by ¹³C-NMR of 110 ppm or more and 160 ppm or less is taken as 100,
the total peak area in 0 ppm or more and less than 60 ppm is 80 to 400 and
the total peak area in 60 ppm or more and less than 110 ppm is 2 to 70.

2. The phenolic resin to be blended with rubber according to claim 1, which is obtained from a material comprising an alkylphenol and a saccharide.

3. The phenolic resin to be blended with rubber according to claim 1, which is obtained from a material comprising an alkylphenol, a saccharide and an aldehyde.

4. The phenolic resin to be blended with rubber according to claim 2 or 3, wherein the alkylphenol comprises an alkylphenol having 4 or more and 20 or less carbon atoms in an alkyl chain.

5. The phenolic resin to be blended with rubber according to any one of claims 2 to 4, wherein the alkylphenol comprises an alkylphenol having an ortho-substituted alkyl chain and/or a para-substituted alkyl chain.

6. The phenolic resin to be blended with rubber according to any one of claims 2 to 5, wherein the saccharide comprises at least one monosaccharide selected from the group consisting of erythrose, xylose, arabinose, glucose, mannose, galactose, erythrulose, fructose, sorbose, psicose and tagatose, or a disaccharide, a trisaccharide, a tetrasaccharide, an oligosaccharide, a polysaccharide having the monosaccharide in the structure thereof.

7. The phenolic resin to be blended with rubber according to any one of claims 3 to 6, wherein the aldehyde comprises an aliphatic aldehyde having 1 or more and 9 or less carbon atoms.

8. A rubber composition comprising 0.5 to 10 parts by mass of the phenolic resin to be blended with rubber (B) according to any one of claims 1 to 7 based on 100 parts by mass of a diene-based rubber component comprising natural rubber and polyisoprene rubber (A).

9. The rubber composition according to claim 8, further comprising 30 to 100 parts by mass of a filler comprising carbon black and silica based on 100 parts by mass of the rubber component (A).

10. The rubber composition according to claim 9, wherein the filler consists only of carbon black, and the rubber composition comprises 30 to 60 parts by mass of the carbon black based on 100 parts by mass of the rubber component (A).

11. The rubber composition according to claim 9 or 10, wherein the carbon black has an average primary particle size of 20 to 60 nm.

12. A tire comprising the rubber composition according to any one of claims 8 to 11.
